# EUROPEAN PATENT APPLICATION

(11) **EP 2 466 363 A1**
(43) Date of publication of application: **20.06.2012**
(21) Application number: 11192199.5
(22) Date of filing: 06.12.2011
(51) Int. Cl.: G02B 27/22, G06T 7/00, H04N 13/00

(54) **Display apparatus and method for processing image thereof**

(30) Priority: 15.12.2010 KR 20100128231
(71) Applicant: Samsung Electronics Co., Ltd., Suwon-si, Gyeonggi-do 442-742 (KR)
(72) Inventor: Ahn, Won-seok, Gyeonggi-do (KR); Chun, Kang-wook, Gyeonggi-do (KR); Han, Seung-hoon, Seoul (KR)
(74) Representative: Robinson, Ian Michael

(57) **Abstract**

A display apparatus and a method for processing an image thereof are provided. The display apparatus includes an image input unit which receives an image, an image processing unit which generates a left eye image and a right eye image corresponding to the input image, a control unit which generates a virtual obstacle corresponding to an obstacle interrupting viewing of the input image, and adds the virtual obstacle to the left eye image and the right eye image, and a display unit which outputs a left eye image and a right eye image, to which the virtual obstacle has been added, alternately. Accordingly, collision of recognition regarding depth information due to an obstacle may be prevented and thus, a user may enjoy a stereoscopic 3D image.

## Description

### CROSS-REFERENCE TO RELATED APPLICATION

This application claims priority from Korean Patent Application No. 10-2010-0128231, filed in the Korean Intellectual Property Office on December 15, 2010.

### BACKGROUND

### 1. Field

Apparatuses and methods consistent with exemplary embodiments relate to a display apparatus and a method for processing an image thereof, and more particularly, to a display apparatus for displaying a three-dimensional (3D) image in which a left eye image and a right eye image are displayed alternately, and a method for processing an image thereof.

### 2. Description of the Related Art

3D stereoscopic image technology is applicable to various fields such as information communication, broadcasting, medicine, education and training, military, gaming, animation, virtual reality, computer aided graphics (CAD), and industrial technology, and is regarded as a core base technology for the next generation 3D stereoscopic multimedia information communication, which is implemented in all the aforementioned fields.

Generally, a stereoscopic sense that a person perceives occurs from a complex effect of a degree of change of thickness of the person's eye lens according to the location of an object to be observed, an angle difference of the object observed from both eyes, differences of location and shape of the object observed from both eyes, a time difference due to movement of the object, and other various psychological and memory effects.

In particular, binocular disparity, caused by about a 6-7 cm lateral distance between the person's left eye and right eye, can be regarded as a main cause of the stereoscopic sense. Due to binocular disparity, the person perceives the object with an angle difference, which makes the left eye and the right eye receive different images. When these two images are transmitted to the person's brain through retinas, the brain can perceive the original 3D stereoscopic image by combining the two pieces of information exactly.

However, if there is an obstacle which interrupts a user's viewing of a 3D image (for example, if there is a structure in front of a display apparatus, or if there is a bezel between display panels in a multi-screen display apparatus comprising a plurality of display panels), a user may experience collision of recognition and thus, may not perceive a stereoscopic sense of the 3D image due to the obstacle (the structure or the bezel).

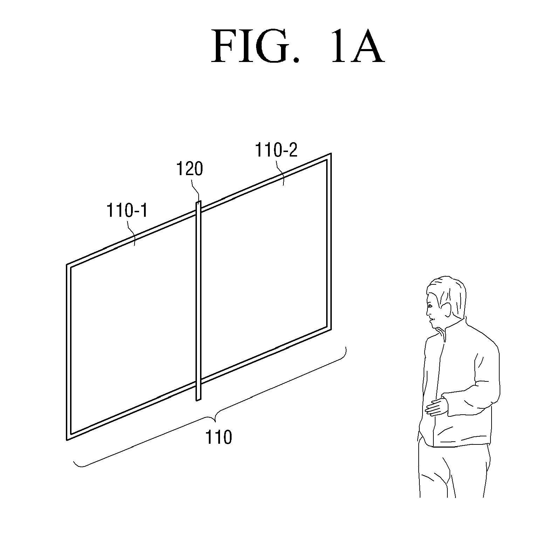

Hereinafter, the reason why such collision of recognition occurs due to an obstacle will be explained with reference to FIGS. 1A to 1C.

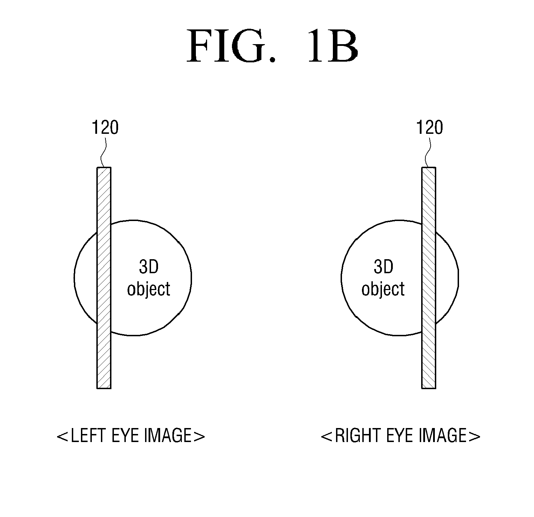

As illustrated in FIG. 1A, in a multi-screen display apparatus 100 having two display panels 110-1, 110-2, a bezel 120 is disposed between the display panels 110-1, 110-2, and thus the location of the bezel appearing on a left eye image and a right eye image appears different from each other as illustrated in FIG. 1B.

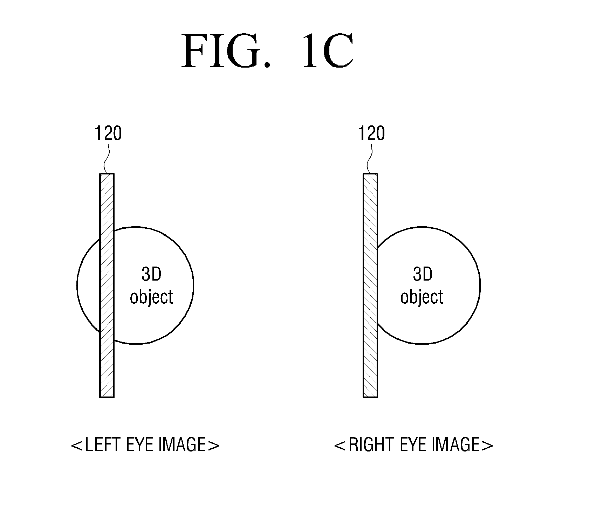

That is, for a user to perceive a stereoscopic sense of an obstacle (i.e., the bezel), the obstacle should appear in a similar position of a left eye image and a right eye image as illustrated in FIG. 1C. However, if an obstacle appears as in FIG. 1B, a user may experience collision of recognition regarding depth information since the obstacle which should look closer to the user is placed behind a 3D object.

Therefore, a method of preventing collision of recognition when an obstacle is in front of a screen while a user is watching a 3D image is required.

### SUMMARY

According to the present invention there is provided an apparatus and method as set forth in the appended claims. Other features of the invention will be apparent from the dependent claims, and the description which follows. One or more exemplary embodiments relate to a display apparatus which, if an obstacle interrupts a user's watching of a 3D image, generates a virtual obstacle (i.e., a virtual obstacle image) corresponding to the obstacle and adds the virtual obstacle to a left eye image and a right eye image and a method for processing an image thereof.

According to an aspect of an exemplary embodiment, there is provided a display apparatus including an image input unit which receives an image, an image processing unit which generates a left eye image and a right eye image corresponding to the input image, a control unit which, if an obstacle interrupts viewing of the input image, generates a virtual obstacle corresponding to the obstacle and adds the virtual obstacle to the left eye image and the right eye image, and a display unit which outputs a left eye image and a right eye image, to which the virtual obstacle is added, alternately.

The control unit may add the virtual obstacle to the left eye image and to the right eye image, so that a number of obstacles blocking the right eye image and the left eye image increases.

The control unit may add a first virtual obstacle in a location of the right eye image corresponding to a location where the obstacle blocks the left eye image and adds a second virtual obstacle in a location of the left eye image corresponding to a location where the obstacle blocks the right eye image.

The control unit may add a virtual obstacle to the left eye image and to the right eye image so that a size of the obstacle blocking the right eye image and the left eye image appears enlarged.

The control unit may add a third virtual obstacle in a left direction of an obstacle of the right eye image so that the obstacle blocking the left eye image appears enlarged, and add a fourth virtual obstacle in a right direction of an obstacle of the left eye image so that the obstacle blocking the left eye image appears enlarged.

The apparatus may further include a storage unit which stores information regarding location, size, and color of the obstacle.

The apparatus may further include an obstacle sensing unit which senses information regarding location, size and color of the obstacle.

The display unit may consist of a plurality of panels.

The obstacle may be a bezel formed between the plurality of display panels.

According to an aspect of an exemplary embodiment, there is provided a method of processing an image in a display apparatus outputting a 3D image, the method including receiving an image, generating a left eye image and a right eye image corresponding to the input image, wherein if an obstacle interrupts viewing of the input image, generating a virtual obstacle corresponding to the obstacle and adding the virtual obstacle to the left eye image and the right eye image, and outputting a left eye image and a right eye image, to which the virtual obstacle is added, alternately.

The adding of the virtual obstacle may include adding a virtual obstacle to the left eye image and to the right eye image so that a number of obstacles blocking the right eye image and the left eye image increases.

The adding of the virtual obstacle may include adding a first virtual obstacle to the right eye image at a location corresponding to a location where the obstacle blocks the left eye image and adding a second virtual obstacle to the left eye image at a location corresponding to a location where the obstacle blocks the right eye image.

The adding of the virtual obstacle may include adding a virtual obstacle to the left eye image and to the right eye image so that a size of the obstacle blocking the right eye image and the left eye image appears enlarged.

The adding of the virtual obstacle may include adding a third virtual obstacle in a left direction of an obstacle of the right eye image so that the obstacle blocking the left eye image appears enlarged, and adding a fourth virtual obstacle in a right direction of the obstacle of the left eye image so that the obstacle blocking the left eye image appears enlarged.

Information regarding location, size, and color of the obstacle may be pre-stored.

The method may further include sensing information regarding location, size and color of the obstacle.

The display unit may consist of a plurality of panels.

The obstacle may be a bezel formed between the plurality of display panels.

### BRIEF DESCRIPTION OF THE DRAWINGS

The above and/or other aspects will be more apparent by describing in detail exemplary embodiments with reference to the accompanying drawings, in which:

FIGS. 1A to 1C are views to explain collision of recognition due to an obstacle;

FIG. 2 is a view illustrating a system for explaining a method for processing an image to generate a virtual obstacle according to an exemplary embodiment;

FIG. 3 is a block diagram of a 3D TV according to an exemplary embodiment;

FIGS. 4A and 4B are views to explain a method for adding a virtual obstacle (i.e., bezel) to increase the number of bezel images according to an exemplary embodiment;

FIGS. 5A and 5B are views to explain a method for adding a virtual obstacle (i.e., bezel) to increase a size of a bezel image according to an exemplary embodiment; and

FIG. 6 is a view to explain a method for processing an image by generating and adding a virtual obstacle to a left eye image and a right eye image according to an exemplary embodiment.

### DETAILED DESCRIPTION OF THE EXEMPLARY EMBODIMENTS

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of the exemplary embodiments. However, exemplary embodiments can be practiced without those specifically defined matters. Also, well-known functions or constructions are not described in detail since they would obscure the application with unnecessary detail.

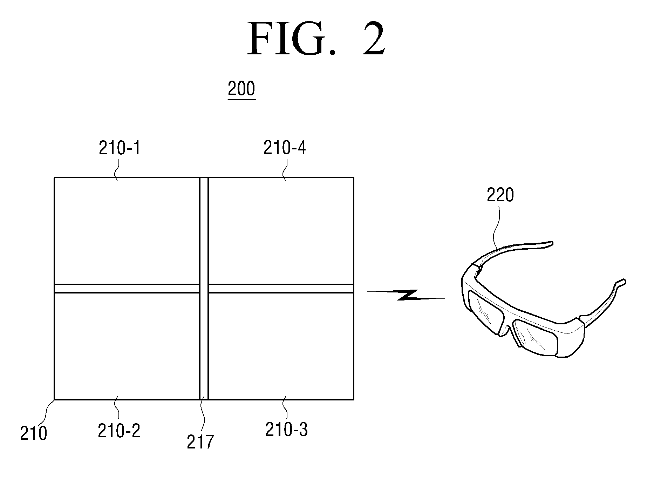

FIG. 2 is a view illustrating a system 200 for processing an image to generate a virtual obstacle according to an exemplary embodiment. As illustrated in FIG. 2, the system 200 includes a 3D TV 210 for displaying a 3D image and 3D glasses 220 for watching a displayed 3D image.

The 3D TV 210 is a type of display apparatus, which receives a 3D image directly from an image capturing apparatus such as a camera, or from a broadcasting station where the 3D image has been transmitted to after editing/processing, processes the 3D image, and displays the 3D image on the screen. In particular, the 3D TV 210 processes a left eye image and a right eye image taking into consideration the format of the 3D image, and enables the processed left eye image and the right eye image to be displayed alternately in a timesharing manner. In addition, the 3D TV 210 generates a sync signal which is synchronized with a timing when the left eye image or the right eye image is displayed in a timesharing manner and transmits the sync signal to the 3D glasses 220.

The 3D TV 210 according to an exemplary embodiment is a multi-screen display apparatus including a plurality of display panels 210-1, 210-2, 210-3, 210-4. Accordingly, the 3D TV 210 may divide an input image into a plurality of screens, perform signal-processing on each of the plurality of screens, and display the processed screens on the plurality of display panels 210-1, 210-2, 210-3, 210-4.

In this case, the 3D TV 210 includes a bezel 217 disposed between the plurality of display panels 210-1, 210-2, 210-3, 210-4. As illustrated in FIGS. 1A to 1C, a user may experience collision of recognition regarding depth information of a 3D image of the 3D TV 20 due to the bezel 217.

Accordingly, in order to prevent collision of recognition due to a bezel which interrupts a user who is watching an input image, the 3D TV 210 generates a virtual bezel or virtual obstacle corresponding to the bezel and adds the generated virtual bezel to a left eye image and a right eye image respectively.

Specifically, the 3D TV 210 may generate a virtual bezel to increase the number of bezels which can be seen by a user or to increase the size of a bezel which can be seen by a user. By generating the virtual bezel, through the 3D TV 210, the bezel 217 which blocks a 3D object may also provide a stereoscopic sense, thereby preventing collision of recognition from occurring.

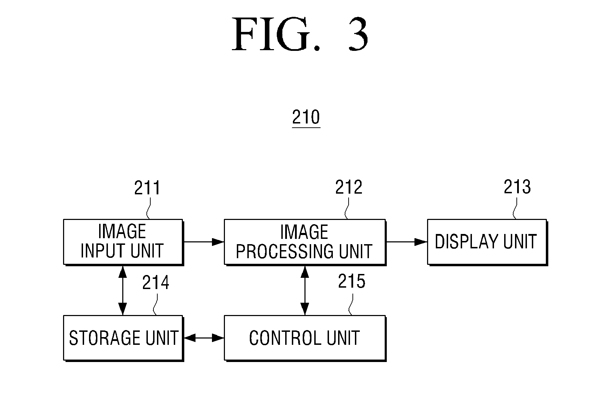

The method for generating a virtual bezel by the 3D TV 210 will be explained in detail with reference to FIGS. 3 to 5B.

FIG. 3 is a block diagram of the 3D TV 210 according to an exemplary embodiment. As illustrated in FIG. 3, the 3D TV 210 comprises an image input unit 211, an image processing unit 212, a display unit 213, a storage unit 214, and a control unit 215.

The image input unit 211 receives a broadcast transmitted wirelessly or via cables from a broadcasting station or a satellite, and demodulates the broadcast. The image receiving unit 211 may be connected to an external device such as a camera, and receive a 3D image from the external device. The external device may be connected wirelessly or via cables through an interface such as S-Video, Component, Composite, D-Sub, DVI, and HDMI. In this case, a 3D image transmitted to the image receiving unit 211 may be in various formats. The 3D image can be transmitted in one of a general frame sequence method, a top-bottom method, a side by side method, a horizontal interleave method, a vertical interleave method, and a checker board method.

The image input unit 211 transmits an input 3D image to the image processing unit 212.

The image processing unit 212 performs operations of processing signals and adding graphic user interfaces (GUIs) such as video decoding, format analyzing, and video scaling on the received 3D image. In particular, the image processing unit 212 generates a left eye image and a right eye image corresponding to the input 3D image using the format of the 3D image input to the image input unit 211.

Since the 3D TV 210 according to an exemplary embodiment includes a plurality of display panels, the image processing unit 212 divides a screen of an input image into a plurality of images and performs signal-processing on each of the divided images.

In addition, the image processing unit 212 controls a graphic user interface (GUI) generating unit (not shown) to generate a GUI and adds the GUI to a left eye image, a right eye image or both of the two images.

The image processing unit 212 transmits the extracted left eye image and the extracted right eye image alternately in a timesharing manner to the display unit 213. In other words, the image processing unit 212 transmits the left eye image and the right image to the display unit 213 in the order of 'left eye image (L1) → right eye image (R1) → left eye image (L2) → right eye image (R2) → ...'.

The display unit 213 outputs the left eye image and the right eye image from the image processing unit 212 alternately and provides the images to a user.

The display unit 213 includes a plurality of display panels, and each display panel outputs the divided left eye image and right eye image alternately.

The storage unit 214 is a storage medium where various programs needed to operate the 3D TV 210 are stored. The storage unit 214 may be embodied as a memory or a Hard Disk Drive (HDD).

In addition, the storage unit 214 stores information regarding the bezel 217 disposed between a plurality of display panels to display a virtual bezel. The information regarding the bezel includes location, size, and color of the bezel.

The control unit 215 controls overall operation of the 3D TV 210 according to a user command received from a user command receiving unit (not shown).

In particular, the control unit 215 controls the image input unit 211 and the image processing unit 212, so that a 3D image can be received, the received 3D image can be separated into a left eye image and a right eye image, and each of the separated left eye image and the separated right eye image can be scaled or interpolated to fit one screen. In addition, the control unit 215 controls a GUI generating unit (not shown) to generate a GUI corresponding to a user command transmitted from a user command receiving unit (not shown) and controls a communication unit (not shown) to generate and transmit a sync signal which is synchronized with an output timing of the left eye image and the right eye image.

Furthermore, the control unit 215 may generate a virtual bezel corresponding to a bezel disposed between a plurality of display panels based on information regarding the bezel stored in the storage unit 214 and add the generated virtual bezel to the left eye image and the right eye image. The control unit 215 may generate a virtual bezel to increase the number of bezel images which can be seen by a user or to increase a size of a bezel image which can be seen by a user.

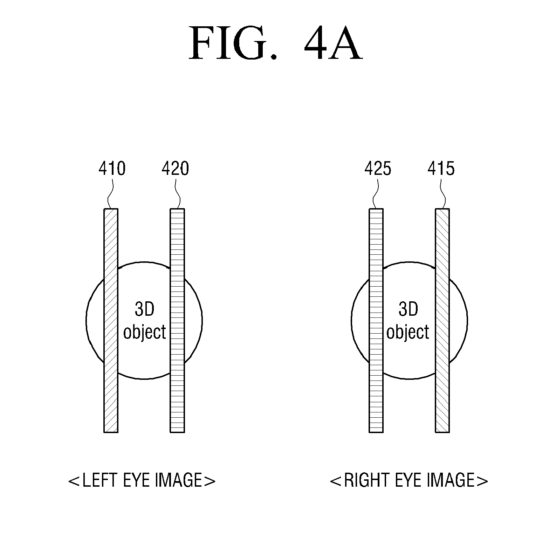

Hereinafter, a method for generating a virtual bezel will be explained with reference to FIGS. 4A to 5B.

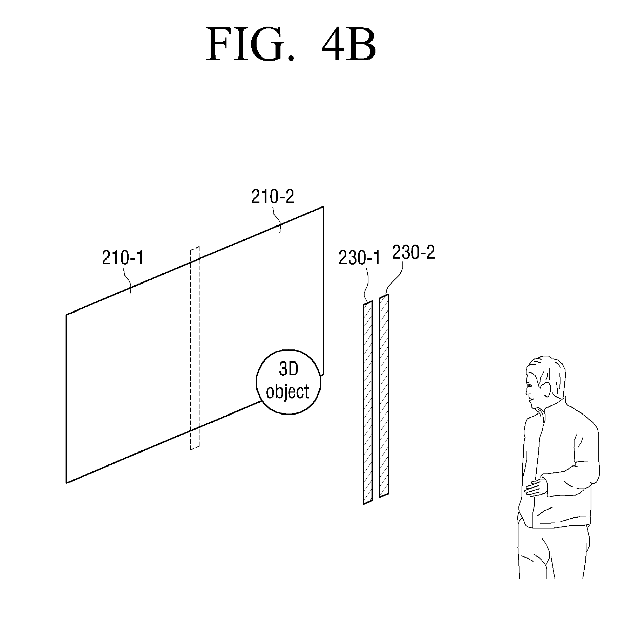

FIGS. 4A and 4B are views to explain a method for adding a virtual bezel to the left eye image and the right eye image to increase the number of bezel images viewed by a user according to an exemplary embodiment.

If a virtual bezel is not generated, the location of the bezel image appearing on a left eye image and a right eye image appears different from each other as illustrated in FIG. 1B. Accordingly, a user cannot perceive a stereoscopic sense, experiencing collision of recognition.

Accordingly, to resolve the above problem, the control unit 215 may generate a virtual bezel by increasing the number of bezel so that the bezel may provide a stereoscopic sense. Specifically, as illustrated in FIG. 4A, the control unit 215 generates a first virtual bezel 425 and adds the first virtual bezel 425 to a location of a right eye image corresponding to a location where a bezel 410 blocks a left eye image and generates a second virtual bezel 420 and adds the second virtual bezel 420 to a location of the left eye image corresponding to a location where a bezel 415 blocks the right eye image.

Accordingly, as the bezel images 410, 415 and the virtual bezels 420, 425 are positioned in locations corresponding to each other in the left eye image and the right eye image, a user may watch two bezel images having a stereoscopic sense in the left eye image and the right eye image.

Specifically, as illustrated in FIG. 4B, if the bezels 410, 415 and the virtual bezels 420, 425 are positioned in locations corresponding to each other in the left eye image and the right eye image, a user may feel as if the two bezels 230-1, 230-2 are in the front of a 3D object, perceiving a stereoscopic sense accordingly.

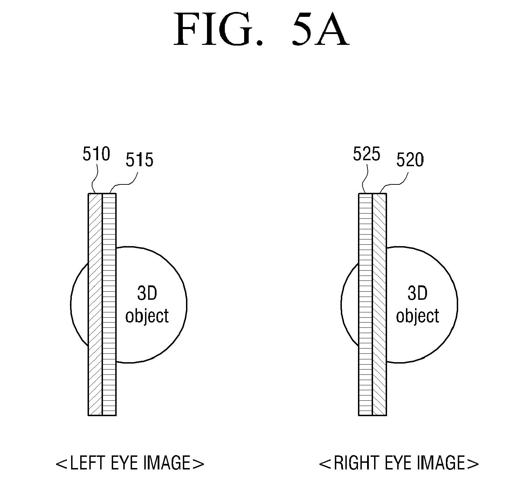

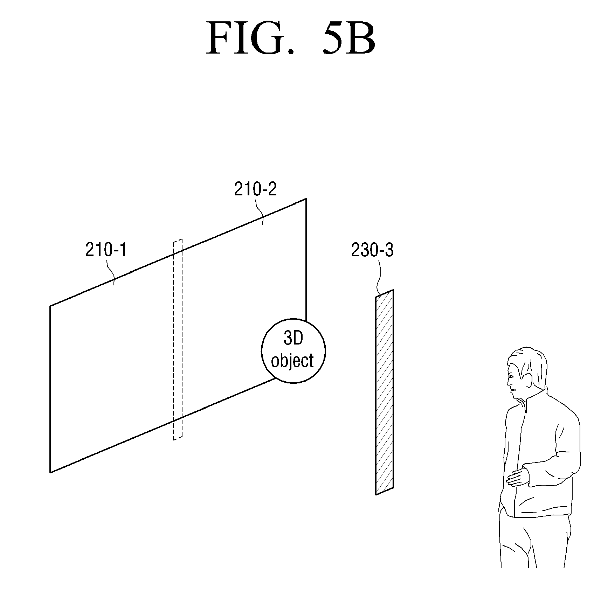

FIGS. 5A and 5B are views to explain a method for adding a virtual bezel to increase a size of a bezel image according to an exemplary embodiment.

The control unit 215 may generate a virtual bezel by increasing the size of a bezel image viewed by a user so that the bezel may have a stereoscopic sense. Specifically, as illustrated in FIG. 5A, the control unit 215 generates a third virtual bezel 525 and adds the third virtual bezel 525 to a left side of a bezel image 520 of a right eye image so that the bezel image 520 blocking the right eye image appears larger, and generates a fourth virtual bezel 515 and adds the fourth virtual bezel 515 to a right side of a bezel image 510 of a left eye image so that the bezel image 510 blocking the left eye image appears larger.

Accordingly, if a location where the bezel image 510 of the left eye image and the virtual bezel 515 are combined corresponds to a location where the bezel image 520 of the right eye image and the virtual bezel 525 are combined, a user may watch the bezel having a stereoscopic sense since a size of the bezel image is increased in the left eye image and the right eye image.

Specifically, if a location where the bezel image 510 of the left eye image and the virtual bezel 515 are combined corresponds to a location where the bezel image 520 of the right eye image and the virtual bezel 525 are combined, a user may feel as if a bezel 230-3 of which size is increased appears protruding more than a 3D object, creating a stereoscopic sense.

As described above, as the 3D TV 210 generates a virtual bezel and adds the generated virtual bezel to a left eye image and a right eye image to create a stereoscopic sense, a user may not experience collision of recognition due to a bezel and enjoy a stereoscopic 3D image.

The above exemplary embodiment, the 3D TV 210 has a plurality of display panels, but this is only an example. According to other aspects the 3D TV 210 may include only one display panel. If a 3D TV has only one display panel, an obstacle may be a structure such as an electrical wiring instead of a bezel. In this case, information regarding the obstacle may be pre-stored in a storage unit, or an obstacle sensing unit (not shown) such as a camera may sense information regarding the location, size, and color of the obstacle and provide the information to a control unit.

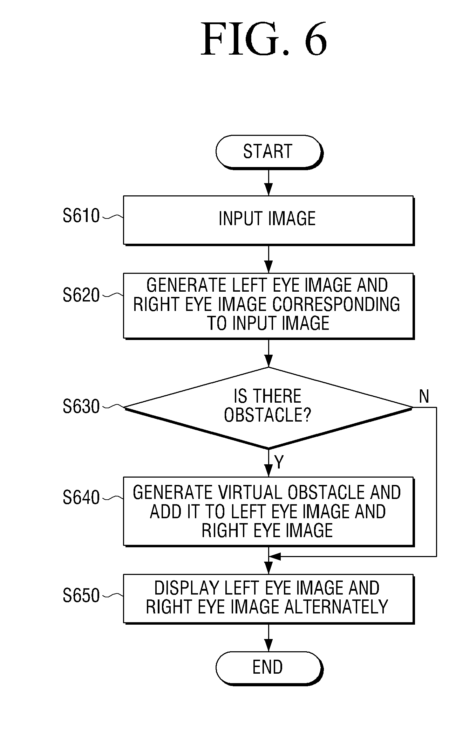

Hereinafter, a method for processing an image in which the 3D TV 210 generates a virtual obstacle will be explained with reference to FIG. 6. FIG. 6 is a view to explain a method for processing an image by generating and adding a virtual obstacle to a left eye image and a right eye image according to an exemplary embodiment.

The 3D TV 210 receives an input image (S610). The input image may be in a 3D image format or a 2D image format.

Once an image is input, the 3D TV 210 generates a left eye image and a right eye image corresponding to the input image (S620). If the 3D TV 210 is a multi-screen display apparatus having a plurality of display panels, the 3D TV 210 may divide the input image to generate a left eye image and a right eye image.

The 3D TV 210 determines whether there is an obstacle based on pre-stored information regarding an obstacle or information obtained by a sensing unit (S630).

If it is determined that there is no obstacle (S630-N), the 3D TV 210 displays the generated left eye image and the right eye image alternately (S650).

However, if it is determined that there is an obstacle (S630-Y), the 3D TV 210 generates a virtual obstacle and adds the generated virtual obstacle to the left eye image and the right eye image (S640). Specifically, the 3D TV 210 may generate and add a virtual obstacle by increasing the number of obstacles which block a 3D object viewable by a user, or may generate and add a virtual obstacle by increasing the size of the obstacle which blocks a 3D object viewable by a user. The detailed method for generating a virtual obstacle has already been explained above with reference to FIGS. 4A to 5B.

Subsequently, the 3D TV 210 displays the left eye image and the right eye image to which the virtual obstacle is added alternately (S650).

Accordingly, as the 3D TV 210 generates a virtual obstacle corresponding to an obstacle interrupting a user's watching of a 3D image, collision of recognition due to the obstacle may be prevented, and thus the user may enjoy a stereoscopic 3D image.

In the above exemplary embodiments, an image is divided and then, a virtual obstacle is added to the divided image, however this is only an example. For example, according to another exemplary embodiment a virtual obstacle may be added to an image and then the image is divided.

In the above exemplary embodiment, a 3D display apparatus is the 3D TV 210. However, this is only an example and thus any 3D display apparatus which can generate and display a left eye image and a right eye image can be used. For example, the 3D display apparatus may be embodied as a 3D projector or a 3D monitor.

In addition, in the above exemplary embodiment, an obstacle is a bezel. However, this is only an example and any obstacle which interferes with watching a 3D image can be processed. For example, the obstacle may be a structure such as electrical wiring and a pillar.

Although a few exemplary embodiments have been shown and described, it would be appreciated by those skilled in the art that changes may be made to the exemplary embodiments without departing from the scope of the inventive concept, as defined in the claims.

## Claims

1. A display apparatus, comprising:
an image input unit which receives an image;
an image processing unit which generates a left eye image and a right eye image corresponding to the input image;
a control unit which, generates a virtual obstacle corresponding to an obstacle interrupting viewing of the input image, and adds the virtual obstacle to the left eye image and the right eye image; and
a display unit which outputs a left eye image and a right eye image, to which the virtual obstacle has been added, alternately.

2. The apparatus as claimed in claim 1, wherein the control unit adds the virtual obstacle to the left eye image and to the right eye image so that a number of obstacles blocking the right eye image and the left eye image increases.

3. The apparatus as claimed in claim 2, wherein the control unit adds a first virtual obstacle to the right eye image at a location corresponding to a location where the obstacle blocks the left eye image and adds a second virtual obstacle to the left eye image at a location corresponding to a location where the obstacle blocks the right eye image.

4. The apparatus as claimed in claim 1, wherein the control unit adds a virtual obstacle adjacent to the obstacle of the right eye image and the left eye image so a size of the obstacle blocking the right eye image and the left eye image appears enlarged.

5. The apparatus as claimed in claim 4, wherein the control unit adds a third virtual obstacle adjacent to the obstacle blocking the right eye image so that the obstacle blocking the right eye image appears enlarged, and adds a fourth virtual obstacle adjacent to the obstacle blocking the left eye image so that the obstacle blocking the left eye image appears enlarged.

6. The apparatus as claimed in one of claim 1 to claim 5, further comprising:
a storage unit which stores information regarding a location, a size, and a color of the obstacle.

7. The apparatus as claimed in one of claim 1 to claim 5, further comprising:
an obstacle sensing unit which senses information regarding a location, a size and a color of the obstacle.

8. The apparatus as claimed in one of claim 1 to claim 7, wherein the display unit comprises a plurality of panels.

9. The apparatus as claimed in claim 8, wherein the obstacle is a bezel interposed between the plurality of display panels.

10. A method for processing an image in a three dimensional (3D) display apparatus, the method comprising:
receiving an image;
generating a left eye image and a right eye image corresponding to the input image;
generating a virtual obstacle corresponding to an obstacle interrupting viewing of the input image, and adding the virtual obstacle to the left eye image and the right eye image; and
outputting a left eye image and a right eye image, to which the virtual obstacle has been added, alternately.

11. The method as claimed in claim 10, wherein the adding the virtual obstacle comprises adding the virtual obstacle so that a number of obstacles blocking the right eye image and the left eye image increases.

12. The method as claimed in claim 11, wherein the adding of the virtual obstacle comprises adding a first virtual obstacle to the right eye image at a location corresponding to a location where the obstacle blocks the left eye image and adding a second virtual obstacle to the left eye image at a location corresponding to a location where the obstacle blocks the right eye image.

13. The method as claimed in claim 10, wherein the adding the virtual obstacle comprises adding the virtual obstacle so that a size of the obstacle blocking the right eye image and the left eye image appears enlarged.

14. The method as claimed in claim 13, wherein the adding of the virtual obstacle comprises adding a third virtual obstacle adjacent to the obstacle of the right eye image so that the obstacle blocking the right eye image appears enlarged, and adding a fourth virtual obstacle adjacent to the obstacle of the left eye image so that the obstacle blocking the left eye image appears enlarged.

15. The method as claimed in one of claim 10 to claim 14, wherein information regarding a location, a size, and a color of the obstacle is pre-stored.
